Europäisches Patentamt

European Patent Office

Office européen des brevets

(19)

(11) EP 0 558 701 B1

(12) FASCICULE DE BREVET EUROPEEN

(45) Date de publication et mention
de la délivrance du brevet:
**29.01.1997 Bulletin 1997/05**

(51) Int Cl.6: **D21H 23/76**
// (D21H17/45, 17:55, 17:66,
17:69, 21:10)

(21) Numéro de dépôt: **92916840.9**

(22) Date de dépôt: **24.07.1992**

(86) Numéro de dépôt international:
**PCT/FR92/00733**

**WO 93/03223 (18.02.1993 Gazette 1993/05)**

(54) **PROCEDE POUR AMELIORER LA RETENTION DANS LA FABRICATION DES PAPIERS OU CARTONS**

VERFAHREN ZUR VERBESSERUNG DER RÜCKHALTUNG BEI DER PAPIER-ODER PAPPEHERSTELLUNG

PROCESS FOR IMPROVING RETENTION DURING THE MANUFACTURE OF PAPER OR BOARD

(84) Etats contractants désignés:
**DE FR GB SE**

(30) Priorité: **26.07.1991 FR 9109781**

(43) Date de publication de la demande:
**08.09.1993 Bulletin 1993/36**

(73) Titulaire: **SNF**
**F-42000 Saint-Etienne (FR)**

(72) Inventeurs:
- **TURACHUS, Maurice**
  **F-38130 Echirolles (FR)**
- **VRISAKIS, Georges**
  **F-69250 Fleurieu-sur-Saône (FR)**
- **HUND, René**
  **F-42390 Villars (FR)**

(74) Mandataire: **Laurent, Michel et al**
**Cabinet LAURENT et CHARRAS,**
**20, rue Louis Chirpaz**
**B.P. 32**
**69131 Ecully Cédex (FR)**

(56) Documents cités:
EP-A- 0 223 223          EP-A- 0 235 893
EP-A- 0 373 306          EP-A- 0 379 997
DE-A- 2 262 906          FR-A- 2 640 613
US-A- 3 052 595

- **PATENT ABSTRACTS OF JAPAN vol. 15, no. 145 (C-823)12 Avril 1991**
- **DATABASE WPIL Section Ch, Week 8810, Derwent Publications Ltd., London, GB; Class A04, AN 8-069688**

## Description

La présente invention concerne un procédé pour améliorer la rétention dans la fabrication des papiers et cartons.

Lors de la fabrication du papier, du carton ou analogue, il est bien connu d'introduire dans la pâte des agents de rétention dont la fonction est de retenir un maximum de fines et de charges dans la feuille en formation. Les effets bénéfiques qui découlent de l'utilisation d'un agent de rétention sont essentiellement :

- l'augmentation de la production et la diminution des coûts de fabrication : économie énergétique, marche plus régulière de la machine, rendement plus élevé en fibres, fines, charges et de produits d'ennoblissement anioniques, plus faible acidité dans le circuit liée à une diminution de l'utilisation de sulfate d'alumine et donc amoindrissement des problèmes de corrosion;
- l'amélioration de la qualité : meilleure formation et meilleur épair; amélioration du taux d'humidité de la feuille, de l'opacité et diminution de la porosité du papier.

Depuis longtemps, on a proposé de faire coaguler les matières colloïdales en suspension dans l'eau en ajoutant de la bentonite. Comme on le sait, la bentonite est une poudre qui gonfle dans l'eau en adsorbant les colloïdes. La grande capacité d'adsorption de la bentonite est bien connue et a été largement mise à profit pour réduire la teneur des matières dissoutes ou en suspension dans la clarification des eaux industrielles ou dans les eaux de papeterie. De même, il est bien connu d'utiliser ce produit pour améliorer la rétention dans la fabrication du papier (voir par exemple document US-A-2 368 630).

Dans la suite du texte et dans les revendications, par "bentonite", on désigne aussi bien les bentonites communes, chimiquement modifiées ou non à l'alcali, ainsi que toutes les argiles gonflantes anioniques de la famille des smectites, des sepiolites, des attapulgites, et de préférence des montmorillonites.

On a également proposé d'ajouter à la bentonite d'autres produits polyélectrolytes minéraux, tels que des sulfates d'aluminium ou des polychlorures d'aluminium (US-A-2 368 630) ou des polymères synthétiques.

Dans le document US-A-3 052 595, on a proposé d'améliorer la rétention du papier en utilisant comme polyelectrolyte des polyacrylamides linéaires. Ce procédé ne s'est guère développé, car il s'est trouvé en concurrence avec des systèmes plus faciles à mettre en oeuvre, tout en étant aussi performants. En outre, même avec les polyacrylamides linéaires actuels, le pouvoir de rétention reste encore insuffisant.

Dans le document EP-A-0 235 893, pour la clarification des eaux de papeterie, on a proposé de faire appel à des polyacrylamides cationiques de poids moléculaire supérieur à un million, de préférence trente millions et plus, essentiellement linéaires, voire partiellement réticulés. On obtient de la sorte un effet de rétention certes satisfaisant, mais encore jugé insuffisant dans l'application papetière, car l'utilisation de bentonite entraînant des difficultés dans le traitement ultérieur de l'eau, les utilisateurs ne font appel à ce système qu'en cas d'avantages significatifs (voir aussi le document US-A-4 305 781). En pratique, le mélange introduit dans la suspension comprend, par rapport aux poids des matières en suspension (fibres fines et charges), de 0,005 à 1 % de polyélectrolyte et de 0,02 à 2 % de bentonite. Malheureusement, la proportion élévée de bentonite nécessite des temps de préparation et de gonflement appréciables, qui entraînent des volumes de suspension importants. En outre, ces fortes concentrations peuvent affecter la qualité des papiers, plus particulièrement en ce qui concerne le collage, la blancheur, voire les caractéristiques mécaniques.

Si comme on le sait, la bentonite donne de bons résultats, avant de l'ajouter à la suspension à traiter, il est indispensable de la laisser gonfler pour augmenter la viscosité du milieu, ce qui rend les suspensions parfois difficilement pompables et/ou dosables.

Dans le document EP-A-0 373 306, on a décrit un procédé de rétention du papier consistant à introduire dans la pâte un polyélectrolyte cationique tel qu'un polyacrylamide, puis de 0,05 à 2,5 % de bentonite, dont on modifie l'ionicité en lui ajoutant une proportion appréciable comprise en 0,5 et 25 %, de préférence de l'ordre de 10 % en poids, d'un polyacrylate de soude fortement chargé. On altère ainsi la vitesse de sédimentation des particules de bentonite, sans pour autant modifier la viscosité de la suspension qui reste difficile à pomper.

L'invention pallie ces inconvénients.

Elle vise un procédé perfectionné du type en question, qui consiste à introduire dans la suspension fibreuse un polyélectrolyte cationique, puis de 0,01 à 3 % du poids des matières en suspension à traiter, de la bentonite contenant un agent défloculant anionique, caractérisé :

- en ce que l'agent défloculant anionique est choisi dans le groupe comprenant les polyphosphates, les polyacrylates de sodium, les silicates de soude, les siliconates de soude, seules ou en mélange ;
- et en ce que la quantité d'agent défloculant anionique représente de 0,03 à 2 % du poids sec de la bentonite, à l'exclusion du polyacrylate de sodium, dont la quantité représente de 0,03 à moins de 0,5 % du poids sec de la bentonite.

Il était connu de défloculer les bentonites avec des agents défloculants ou dispersants en vue de retarder la prise en masse des suspensions d'argiles utilisées dans la fabrication des ciments ou des enduits de plâtre (voir par exemple FR-A-2 488 596). On ne pouvait pas imaginer que l'utilisation du même moyen, à savoir un agent défloculant, permette dans une application des bentonites totalement différente d'améliorer les performances d'un système dual : bentonite plus polyélectrolyte.

En d'autres termes, l'invention consiste à utiliser un même moyen général à savoir bentonite + agent défloculant, mais dans d'autres combinaisons (bentonite + polyélectrolyte) pour d'autres applications (rétention et non fabrication des ciments).

Par "agent défloculant" ou "défloculant", on désigne des composés anioniques qui ont pour effet d'améliorer les propriétés de fluidité, d'homogénéité et de maniabilité des suspensions de bentonite par effets dispersifs. En pratique, on fait appel à des polyphosphates, des polyacrylates de sodium, des silicates de soude, des siliconates de soude seules ou en mélange. On utilise de préférence des polyacrylates de soude, notamment pour éviter des effets néfastes, grâce aux faibles concentrations d'utilisation. Comme déjà dit, cet agent défloculant est avantageusement associé à la bentonite lors de sa mise en suspension.

Grâce à l'invention, on a constaté qu'on obtient un résultat totalement inattendu, à savoir que les suspensions de bentonite préalablement défloculées conformément à l'invention, présentent un rendement accru de l'ordre de 50 % et cela quelle que soit la concentration en bentonite. Par "rendement", on entend soit une quantité inférieure de bentonite pour une même teneur en matière en suspension dans l'eau à traiter, soit une teneur moindre des matières en suspension pour une même quantité de bentonite.

L'augmentation du rendement permet donc également de diminuer la consommation de bentonite et par là, réduit les inconvénients dus à son utilisation, en particulier dans le volume des boues extraites. En outre, on réduit les effets néfastes, notamment sur les caractéristiques physiques et les propriétés de collage du papier.

La quantité de défloculant peut varier en fonction de sa nature et de l'application envisagée.

Lorsque comme défloculant, on fait appel à du polyacrylate de sodium, dénommée aussi polyacrylate de soude, qui est le composé préféré, les quantités comprises entre 0,03 % et 2 % par rapport à la quantité de bentonite sont suffisantes. En effet, en deça de 0,03 %, on déflocule seulement en partie la bentonite, ce qui limite considérablement les effets de synergie ultérieurs avec le polyélectrolyte. De même, au delà de 2 %, on risque d'induire des effets néfastes avec les autres composants du papier (agents de collage, agents fixateurs cationiques, amidon cationique...). Selon l'invention, la quantité de polyacrylate de soude introduite est comprise entre 0,03 (de préférence 0,1) et moins de 0,5 % par rapport à la quantité de bentonite. On ne pouvait pas penser qu'une aussi faible proportion de cet agent défloculant permette d'améliorer considérablement les propriétés de rétention, tout en abaissant substantiellement la quantité utile de bentonite et de polyélectrolyte.

En outre, cela permet de réduire le temps d'incorporation et de réaction de la bentonite avec le milieu à traiter.

Dans l'application à la rétention dans la fabrication du papier, la quantité de bentonite préférée est comprise entre 0,05 et 0,5 % du poids sec de la suspension fibreuse à traiter. Cela se traduit en pratique, à performances égales, par une économie de moitié de bentonite. En outre, à quantité de bentonites égales, on améliore les performances.

Comme déjà dit, il importe que la suspension à traiter contienne également de manière connue un composé floculant polyélectrolyte. On utilise des composés minéraux, tels que polychlorosulfate d'aluminium (WAC), le polychlorure d'aluminium (PAC), des sulfates d'alumine. De préférence, on fait appel à des polymères synthétiques, tels que par exemple les polyacylamides linéaires, ramifiés, amphotères, cationiques, anioniques, les polyamines, le polydiallyldiméthylamonium chlorure (polydadmac).

La quantité de polyélectrolytes varie en fonction de la nature et de l'application envisagées. L'introduction d'agents défloculants caractéristiques de l'invention améliore de manière inattendue la synergie entre la bentonite et la polyélectrolyte, ce qui à quantités égales de polyélectrolytes, permet d'améliorer considérablement l'effet de rétention. En outre, on peut également de la sorte réduire les quantités de polyélectrolyte.

En pratique, les quantités de polyelectrolyte sont réduites du tiers à la moitié des quantités habituelles.

Bref, la caractéristique selon laquelle on fait appel à une bentonite défloculée permet non seulement de baisser la quantité de bentonite mais également celle de polyélectrolyte tout en améliorant la synergie entre ces deux composés.

La manière dont l'invention peut être réalisée et les avantages qui en découlent ressortiront mieux des exemples de réalisation qui suivent.

**I - Préparation des suspensions de bentonite :**

Dans un bécher de 1000 ml, on ajoute sous agitation dans 500 ml d'eau potable un agent défloculant, puis de la bentonite. On maintient l'agitation dix minutes environ.

Dans les essais comparatifs témoins réalisés conformément à l'art antérieur, c'est-à-dire sans ajouter de produit défloculant, on obtient une suspension de bentonite en laissant gonfler celle-ci dans l'eau pendant au moins trois heures environ.

Dans la suite de la description et dans les revendications, comme déjà dit, les poids sont exprimés en sec, alors que les concentrations de bentonite sont données en grammes/litre d'eau (g/l).

Ainsi, avec une bentonite de Sardaigne, on peut obtenir une concentration de 100 g/l sans utilisation d'agent défloculant. En revanche, en ajoutant à la suspension 0,1 % d'un agent défloculant du commerce, à savoir un polyacrylate de soude commercialisé par la Société COATEX sous la référence GX, on peut obtenir une suspension de bentonite de 250 g/l (amélioration de la concentration de 250 %), tout en obtenant une viscosité (Brookfield) similaire à celle de la suspension préparée de manière classique sans défloculant, viscosité au-delà de laquelle la suspension n'est plus pompable.

**II- Détermination des quantités minimum et maximum de défloculant:**

On considère que la quantité minimum de défloculant correspond à une chute de viscosité de moitié. Ainsi, on obtient une suspension présentant une viscosité de 400 cps en ajoutant seulement 0,1 % d'un polyacrylate de soude commercialisés par COATEX sous la dénomination GX à une suspension à 8 % de bentonite grecque, dans de l'eau distillée. En revanche, une suspension similaire sans agent défloculant présente une viscosité de 880 cps.

Le maximum de quantité d'agent défloculant introduit correspond au point où la viscosité reste pratiquement stable, car à partir de ce point, il n'y a plus d'amélioration. Avec la même bentonite mise en suspension à 8 % dans l'eau, on observe les viscosités suivantes :

- bentonite sans agent défloculant : 3900 cps
- bentonite :

    . avec 8 % d'agent défloculant (silicate de soude) : 26 cps
    . avec 16 % (silicate de soude) : 16 cps.

Ainsi, l'introduction d'un agent défloculant provoque une chute spectaculaire de la viscosité, donc facilite le pompage.

Selon l'invention, la quantité d'agent défloculant choisi dans le groupe comprenant les polyphosphates, des silicates ou siliconates de soude, seules ou en mélange, représente de 0,03 à 2 % du poids sec de la bentonite.

**III - Rétention du papier**

1 - Préparation d'un polyacrylamide ramifié faiblement cationique (PAM-C)

De manière connue, on prépare un polyacrylamide ramifié faiblement cationique à base d'acrylamide et de chlorure de triméthylaminoéthylacrylate (ADAME).

Ce polymère se présente sous forme d'une poudre blanche, parfaitement soluble (40 g/l à température ambiante), présentant un taux d'insoluble inférieur à 0,02 %.

2 - Préparation d'un terpolyacrylamide amphotère à prépondérance faiblement cationique (T-PAM-C)

De manière connue, on prépare un terpolymère amphotère du type en question à base d'acrylamide, de chlorure de métacrylamidopropylméthylammonium (MAPTAC) et d'acide acrylamidométhylpropylsulfonique (AMPS). Le terpolymère obtenu se présente sous la forme d'une poudre blanche parfaitement soluble, présentant un taux d'insoluble inférieur à 0,02 % et ayant la composition molaire :

- acrylamide : 85 %
- AMAS : 5 %
- MAPTAC : 10 %.

3 - Mode opératoire :

De manière connue, on prépare une pâte à papier comprenant 80 % de pâte proprement dite à raison de trente cinq pourcent (35 %) de feuillus blanchi, dix pourcent (10 %) de casse-couché et trente cinq pourcent (35 %) de kraft blanchi, et vingt pourcent (20 %) de carbonate de calcium.

En milieu neutre, on colle avec 2,0 % d'alkyle cétène dimère.

La pâte fibreuse est mise en suspension dans l'eau à raison de 4 g/l. Le pH de cette suspension est de 7,5.

Dans le bol d'une formette automatisée CTP, on introduit 650 cm3 de cette suspension fibreuse. On ajoute alors l'agent de rétention (le polyélectrolyte) à différentes concentrations. On agite trente secondes.

On ajoute ensuite de la bentonite, du type de celle commercialisée par le Demandeur sous la dénomination CP-B1, ayant une densité de 900 kilogrammes/mètre cube, un pouvoir gonflant de 40 ml/2g, une capacité d'échange cationique de 85 meq/100 g à sec, et une dimension moyenne inférieure à 75 μm. On agite à nouveau trente secondes, puis on égoutte par vide.

On mesure alors la turbidité dans les eaux blanches par pesée de la matière sèche, ainsi que le poids de la feuille formée séchée. Le bilan massique permet d'établir le chiffre de la rétention selon la formule :

$$\frac{\text{Poids de la feuille}}{\text{Poids de la feuille + poids sec dans eaux blanches}} \times 100$$

On utilise comme agents de rétention polyélectrolytes, les deux polymères décrits ci-dessus (II et III) et un polyacrylamide (I) de même cationicité et de même poids moléculaire que II et III, commercialisé par le Demandeur sous la dénomination FO 4190 PG.

La bentonite a été mise en suspension de deux façons :

- classique c'est à dire, sans aucun additif (bentonite classique),
- suspension de bentonite préalablement défloculée par un polyacrylate de soude (bentonite traitée) selon l'invention.

Les différents résultats obtenus sont résumés dans le tableau ci-après, dans lequel :

I = désigne le polyacrylamide linéaire FO 4190 PG

II = le PAM - C

III = le T-PAM - C

et dans lequel :

- la première ligne donne la quantité de bentonite introduite en gramme par tonne;
- la dernière ligne indique la quantité pour mille (‰) de polyelectrolyte.

**RETENTION OBTENUE AVEC BENTONITE TRAITEE**

| | 1000 | | | | | 700 | | | | |
|---|---|---|---|---|---|---|---|---|---|---|
| I | 80 | 82 | 76 | 69 | 65 | 75,2 | 77 | 70,5 | 67,8 | 63 |
| II | 97 | 94,5 | 92.2 | 82 | 77 | 96 | 91,8 | 90 | 80,5 | 75,2 |
| III | 96,5 | 93,1 | 89 | 76 | 70 | 91,7 | 90,2 | 84 | 72 | 67,5 |
| ‰ | 0.75 | 0.5 | 0.2 | 0.05 | 0.03 | 0.75 | 0.5 | 0.2 | 0.05 | 0.03 |

**RETENTION OBTENUE AVEC BENTONITE CLASSIQUE**

| | 1000 | | | | | 1400 | | | | |
|---|---|---|---|---|---|---|---|---|---|---|
| I | 68 | 72 | 63 | 60 | 57 | 75 | 78 | 70 | 67 | 63 |
| II | 89 | 85 | 83 | 72 | 68 | 96,1 | 92,1 | 89,5 | 80 | 75 |
| III | 86 | 82 | 77 | 65,5 | 61 | 91,1 | 89 | 82 | 71 | 67 |
| ‰ | 0.75 | 0.5 | 0.2 | 0.05 | 0.03 | 0.75 | 0.5 | 0.2 | 0.05 | 0.03 |

Ces essais comparatifs démontrent que, indépendamment de la concentration et du mode de préparation de la bentonite, les polyelectrolytes ramifiés et amphotères présentent une supériorité en effet de rétention, par rapport aux polyélectrolytes cationiques linéaires à haut poids moléculaire.

Quelle que soit la nature du polyelectrolyte utilisé, le fait d'utiliser une bentonite dispersée ou défloculée, permet d'obtenir des valeurs de rétention beaucoup plus élevées qu'avec la même bentonite non traitée (à concentration inférieure ou égale).

Par ailleurs, l'utilisation de la bentonite défloculée permet d'accéder à de meilleures rétentions, sans modifier la quantité d'agent de rétention tout en diminuant la consommation de bentonite utilisée.

Ainsi, la dispersion d'une bentonite permet de réduire de moitié sa consommation, tout en donnant la même rétention.

Le procédé selon l'invention, qui consiste à défloculer les bentonites avant des les introduire dans le milieu aqueux à traiter, présente de nombreux avantages par rapport aux solutions connues à ce jour. On peut citer :

- la réduction des problèmes liés à la mise en suspension, de la bentonite à son augmentation de la viscosité lors de sa mise en suspension, et la réduction du temps de gonflement ;
- la préparation de solutions mères de bentonite à plus forte concentration mais à plus faible viscosité ; ce qui permet de réduire le dimensionnement des équipements de mise en suspension.
- l'augmentation de la rétention ;
- la diminution des quantités de boues extraites ;
- la diminution de la quantité de bentonites utilisées, et par conséquent la limitation de la quantité rejetée dans les eaux blanches ;
- l'augmentation de la rétention occasionnée par la mise en oeuvre de ce système qui entraîne une diminution des quantités de boues rejetées sur le traitement d'eaux après la machine à papier.

De la sorte, ce procédé est utilisé avantageusement pour améliorer la rétention dans la fabrication des papiers ou cartons.

## Revendications

1. Procédé pour améliorer la rétention dans la fabrication du papier, qui consiste à introduire dans la suspension fibreuse un polyélectrolyte cationique, puis de 0,01 à 3 % du poids des matières en suspension à traiter, de la bentonite contenant un agent défloculant anionique, <u>caractérisé</u>:

   - en ce que l'agent défloculant anionique est choisi dans le groupe comprenant les polyphosphates, les polyacrylates de sodium, les silicates de soude, les siliconates de soude, seules ou en mélange ;
   - et en ce que la quantité d'agent défloculant anionique représente de 0,03 à 2 % du poids sec de la bentonite, à l'exclusion du polyacrylate de sodium, dont la quantité représente de 0,03 à moins de 0,5 % du poids sec de la bentonite.

2. Procédé selon la revendication 1, caractérisé en ce que l'agent défloculant est un polyacrylate de soude et est introduit à une quantité comprise entre 0,1 à moins de 0,5 % par rapport au poids de la bentonite.

3. Procédé selon la revendication 1, caractérisé en ce que le polyélectrolyte cationique est choisi dans le groupe comprenant les polychlorosulfates d'aluminium (WAC), les polychlorures d'aluminium (PAC), les sulfates d'alumine, les polyacrylamides, les polyamides, les polydadmacs.

4. Procédé selon la revendication 3, caractérisé en ce que le polyélectrolyte cationique est un polyacrylamide choisi dans la famille des polyacrylamides linéaires ramifiés et des polyacrylamides linéaires amphotères.

## Patentansprüche

1. Verfahren zur Verbesserung der Rückhaltung in der Papierherstellung, umfassend das Einführen eines kationischen Polyelektrolyts in die faserstoffhaltige Suspension, danach von 0,01 bis 3 Gew.-% Bentonit, der ein anionisches Entflockungsmittel umfaßt, in Bezug auf die Stoffe in der zu behandelnden Suspension, dadurch gekennzeichnet, daß:

   - das anionisches Entflockungsmittel gewählt wird aus der Gruppe umfassend Polyphosphate, Natriumpolyacrylate, Natriumsilicate, Natriumsiliconate, alleine oder im Gemisch;
   - und die Menge des anionischen Entflockungsmittels von 0,03 bis 2 Gew.-% in Bezug auf das Trockengewicht des Bentonits beträgt, unter Ausschluß von Natriumpolyacrylat, dessen Menge von 0,03 bis weniger als 0,5 Gew.-% in Bezug auf das Trockengewicht des Bentonits beträgt.

2. Verfahren gemäß Anspruch 1, dadurch gekennzeichnet, daß das Entflockungsmittel ein Natriumpolyacrylat ist und in einer Menge von zwischen 0,1 und weniger als 0,5% im Verhältnis zu dem Gewicht des Bentonits eingeführt wird.

3. Verfahren gemäß Anspruch 1, dadurch gekennzeichnet, daß der kationische Polyelektrolyt gewählt wird aus der Gruppe umfassend Aluminiumpolychlorsulfate (WAC), Polyaluminiumchloride (PAC), Aluminiumoxidsulfate, Polyacrylamide, Polyamide, Polydadmacs.

4. Verfahren gemäß Anspruch 3, dadurch gekennzeichet, daß der kationische Polyelektrolyt ein Polyacrylamid gewählt aus der Familie der linearen, verzweigten Polyacrylamide und der linearen, amphoteren Polyacrylamide ist.

**Claims**

1. Process for improving retention in papermaking, which consists in introducing into the fibrous suspension a cationic polyelectrolyte and then from 0.01 to 3 %, relative to the weight of the suspended materials to be treated, of bentonite containing an anionic deflocculant, <u>characterized</u>,

   - in that the anionic deflocculant is chosen from the group consisting of polyphosphates, sodium polyacrylates, sodium silicates and sodium siliconates, individually or mixed;
   - and in that the quantity of anionic deflocculant represents from 0.03 to 2 % of the dry weight of bentonite, with the exception of sodium polyacrylate, whose quantity represents from 0.03 to less than 0.5 % of the dry weight of bentonite.

2. Process according to Claim 1, characterized in that the deflocculant is a sodium polyacrylate and is introduced in a quantity of between 0.1 to less than 0.5 % relative to the weight of bentonite.

3. Process according to Claim 1, characterized in that the cationic polyelectrolyte is chosen from the group consisting of polyaluminium chlorosulphates (WAC), polyaluminium chlorides (PAC), alumina sulphates, polyacrylamides, polyamides and polydadmacs.

4. Process according to Claim 3, characterized in that the cationic polyelectrolyte is a polyacrylamide chosen from the class of branched linear polyacrylamides and amphoteric linear polyacrylamides.